(19) **Europäisches Patentamt / European Patent Office / Office européen des brevets**

(11) **EP 1 833 593 B1**

(12) **FASCICULE DE BREVET EUROPEEN**

(45) Date de publication et mention de la délivrance du brevet:
**09.04.2008 Bulletin 2008/15**

(51) Int Cl.:
*B01D 53/00* (2006.01)   *B01D 50/00* (2006.01)
*B03C 3/15* (2006.01)   *B03C 3/155* (2006.01)

(21) Numéro de dépôt: **05825747.8**

(22) Date de dépôt: **20.12.2005**

(86) Numéro de dépôt international:
**PCT/FR2005/051116**

(87) Numéro de publication internationale:
**WO 2006/070152 (06.07.2006 Gazette 2006/27)**

(54) **DISPOSITIF D'EPURATION D'UN FLUX GAZEUX CONTENANT DES VAPEURS CONDENSABLES**

VORRICHTUNG ZUR REINIGUNG EINES KONDENSIERBARE DÄMPFE ENTHALTENDEN GASSTROMS

DEVICE FOR PURIFYING A GAS STREAM CONTAINING CONDENSABLE VAPOURS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.12.2004 FR 0413944**

(43) Date de publication de la demande:
**19.09.2007 Bulletin 2007/38**

(73) Titulaire: **COMMISSARIAT A L'ENERGIE ATOMIQUE**
**75015 Paris (FR)**

(72) Inventeurs:
• **BROTHIER, Méryl**
**F-13100 Aix En Provence (FR)**
• **TURCHET, Jean-Pierre**
**45 Montée de Costebelle, F-83400 Hyères (FR)**
• **ESTUBIER, Pierre**
**F-04100 Manosque (FR)**

(74) Mandataire: **Poulin, Gérard**
**Société BREVATOME**
**3, rue du Docteur Lancereaux**
**75008 Paris (FR)**

(56) Documents cités:
DE-A1- 19 723 846      US-A- 3 093 467
US-A- 3 890 122

EP 1 833 593 B1

## Description

### DOMAINE TECHNIQUE

L'invention concerne un dispositif de séparation de vapeurs condensables d'un flux gazeux chargé en fines ou non. Plus particulièrement, elle concerne un dispositif permettant un maintien de la composition du flux gazeux incondensable et la récupération des condensats pour leur emploi ultérieur ou simplement leur traitement séparé.

### ÉTAT DE LA TECHNIQUE ANTÉRIEURE

De nombreux procédés de type physico-chimique (thermolyse, méthanisation...) génèrent des gaz potentiellement valorisables. Toutefois ils doivent préalablement subir une épuration pour être compatibles avec les critères de qualité permettant leur utilisation dans d'autres procédés (co-génération, synthèse de carburants...). La problématique de traitement de ces gaz est donc un point clé dans ce processus de valorisation. De nombreuses solutions techniques ont été mises au point pour résoudre ce problème. Elles peuvent être classées dans six grandes familles :

Approche thermique : ce type de technique constitue la solution radicale dans la mesure où il est admissible de porter à haute température le gaz valorisable. On entend par admissible le fait qu'il existe une possibilité de chauffer le gaz sans qu'il y ait perte de la qualité de ce dernier. Par contre cette approche n'est pas toujours admissible (au-delà de toute considération économique), comme par exemple en cas de présence simultanée de carburant et de comburant. Par ailleurs, ce type de traitement ne permet pas de récupérer les espèces séparées (parce qu'il entraîne généralement leur destruction partielle ou totale) ce qui peut constituer un handicap rédhibitoire pour le cas où ces espèces (hormis le gaz valorisable) présentent elles-mêmes un potentiel de valorisation. Enfin, des considérations de rendement énergétique rendent souvent cette approche peu rentable.

Approche oxydante : dans ce cas l'énergie apportée aux gaz à épurer l'est sous forme de potentiel chimique, généralement par le biais d'un oxydant qui est communément l'oxygène pur ou bien celui constitutif de l'air. Dans cette configuration, au contraire de l'approche purement thermique qui consiste uniquement à porter en température le gaz à traiter, le traitement est souvent moins consommateur d'énergie puisque l'exothermicité des réactions d'oxydation est exploitée. Néanmoins, la contre-partie de cette approche est non seulement une destruction des espèces condensables, ce qui est un inconvénient dans le cas où elles seraient valorisables, mais aussi une modification de la qualité des gaz à épurer liée à une dilution par le produit d'oxydation des espèces pouvant l'être dans les conditions du traitement.

Approche séparative par changement d'état : cette approche repose sur la différence de la température de changement d'état des espèces constitutives du gaz à épurer, et notamment sur leur température de condensation. Des températures plus ou moins basses peuvent être nécessaires, ce qui peut conduire à des dispositifs de purification relativement lourds à mettre en oeuvre. Par ailleurs, la séparation obtenue n'est généralement pas totale du fait de limitations physiques (considérations liées aux tensions de vapeur, notamment). Pour améliorer la séparation, il est alors possible d'utiliser un média favorisant le captage de l'espèce à séparer. Ce média peut être aussi bien liquide (de type solvant injecté par nébulisation au sein du séparateur) que solide (de type fibre ou membrane) pouvant constituer le média de séparation (voir l'approche séparative par absorption-adsorption). L'option d'utiliser un barbotage pour épurer le gaz peut s'avérer quant à elle relativement efficace même si elle génère des effluents en quantités plus ou moins importantes avec un risque concomitant d'entraînement d'une part du liquide de barbotage et donc de pollution du gaz à traiter.

Approche séparative par effet mécanique : cette approche repose sur différents effets :

- L'effet centrifuge appliqué sur des espèces constitutives du gaz à épurer et ayant des masses différentes. Le cas de la séparation isotopique peut même être traité par ce type d'approche (ultracentrifugation) même si elle présente l'inconvénient d'être relativement onéreuse.
- L'effet d'impaction favorisant l'agglomération de fines particules de condensats augmentant par là même l'effet de centrifugation.
- La filtration via un média spécifique et/ou le dépôt de filtration (gâteau) pouvant lui-même faire office de média constitué in situ, phénomène améliorant la filtration.

Approche séparative par affinité de charge électrique (effet de polarité), phénomène notamment exploité dans les électro-précipitateurs de filtration des gaz.

Approche séparative par absorption-adsorption, phénomène d'autant plus efficace qu'il se produit à basse température.

Ces différentes approches présentent des inconvénients génériques (dégradation de la qualité des produits, rendement, coût...) mais aussi des limitations propres à chaque application pour en décliner l'application industrielle. C'est pourquoi de nouvelles approches combinant un certain nombre des approches précipitées ont été mises au point :

Le brevet US 4 723 970 concerne un dispositif de séparation gaz/eau s'appuyant sur une séparation centrifuge. Ce dispositif est compact mais ne permet pas une séparation poussée.

Le brevet DE 8 905 182 concerne un système de séparation liquide vapeur avec filtration combinée. Cet ensemble ne présente notamment aucune fonction de condensation poussée ce qui limite son application à l'épuration de vapeur constitutive d'un flux gazeux sale ou non.

Le document WO 9 208 937 concerne un ensemble d'extraction d'espèces condensables d'un flux gazeux par centrifugation couplé à un refroidissement. Il ne permet d'assurer qu'un niveau d'épuration limité dans la mesure notamment où aucun média de séparation n'est mis en oeuvre.

Le document US 3 890 122 concerne un appareil de filtration multi-étagé faisant intervenir la séparation par centrifugation, condensation et filtration sur média filtrant. Ce dispositif présente toutefois un certain nombre d'inconvénients :

Il est dédié au traitement de l'air comprimé. Il est conçu pour une épuration spécifique et limitée notamment en ce qui concerne la présence éventuelle de vapeurs condensables plus ou moins volatiles.

La séparation par centrifugation est principalement assurée par un corps de calandre hélicoïdale imposant une efficacité de séparation en fonction du débit ou de la pression de fonctionnement (couplage du dispositif à un compresseur). Le dispositif souffre ainsi d'un manque de degrés de liberté concernant son mode de pilotage. Enfin, il n'est pas compact.

L'invention a par conséquent pour objet de proposer un dispositif d'épuration d'un flux gazeux qui remédie à ces inconvénients. Il devra être compact au vu des débits de flux gazeux qu'il peut traiter, peu sensible à la présence de fines dans le flux à épurer, et capable de fonctionner en continu ou du moins en minimisant la fréquence de décrassage du dispositif. Il devra en outre être flexible par son mode de fonctionnement pour permettre d'adapter sa conduite aux conditions de séparation recherchées, par exemple apte à générer un flux de condensats exempts d'additifs dans le cas où les condensats constituent la matière noble à récupérer. D'une manière générale, il devra ainsi tout aussi bien s'adapter à l'épuration du flux gazeux à proprement parler (cas où le flux à valoriser est le gaz) qu'à la récupération des espèces condensables (cas où les vapeurs condensables constituent la matière à valoriser).

Ces buts sont atteints par le fait que le dispositif d'épuration d'un flux gazeux contenant des vapeurs condensables, comprend une calandre définissant un volume étanche, un refroidisseur pour tremper le flux gazeux, un ensemble tournant comprenant un rotor et une virole cylindrique de séparation et filtration montée sur le rotor et tournant avec lui, un tube support monté sur le rotor et portant un dispositif turbuleur-racleur, une électrode entourant la virole de séparation et filtration et une contre-électrode centrale pour la création d'un champ électrostatique dans la calandre, une canalisation de sortie du gaz épuré, une canne de sortie des condensats assurant l'évacuation tout en garantissant l'étanchéité du système.

De préférence la virole de séparation et filtration est constituée d'anneaux circulaires crénelés superposés, au moins une plaque d'impact et de séparation étant fixée sur chacun des anneaux de la virole.

Avantageusement, la virole de séparation et filtration est constituée d'anneaux thermiquement isolants et de plaques d'impaction thermiquement conductrices permettant d'assurer un transfert thermique maîtrisé entre la zone interne à la virole de séparation-filtration et une zone thermostatée.

Avantageusement encore la virole de séparation et filtration est constituée de matériaux absorbants aptes à capter les espèces condensables.

Dans une réalisation, la zone thermostatée entoure la virole de séparation et filtration.

La canalisation de sortie du gaz épuré peut jouer simultanément le rôle de contre-électrode.

## BRÈVE DESCRIPTION DES DESSINS

D'autres caractéristiques et avantages de l'invention apparaîtront encore à la lecture de la description qui suit d'exemples de réalisation donnés en référence aux figures annexées. Sur ces figures :

- la figure 1 est un schéma de principe d'un nombre d'étages théorique fixé par les caractéristiques procédé du dispositif ;
- la figure 2 est un schéma de principe représentant les flux et les grandes fonctions d'un dispositif d'épuration conforme à l'invention ;
- la figure 3 est une vue en coupe d'un mode de réalisation d'un dispositif d'épuration conforme à la présente invention ;
- la figure 4 est une vue en coupe partielle selon la ligne IV-IV de la figure 3 ;
- la figure 5 est une vue de détail du média de séparation et de filtration du dispositif de la figure 3 ;
- la figure 6 est une vue en coupe selon le repère VI-VI de la figure 5 ;
- la figure 7 illustre le principe de séparation et de transfert des condensats ;
- la figure 8 est une vue en coupe d'un cryocondenseur destiné à être utilisé dans un dispositif d'épuration conforme à l'invention ;

- la figure 9 est une vue schématique en coupe d'un dévésiculeur à plaques utilisé en référence ;
- les figures 10 à 14 sont des courbes comparatives qui mettent en évidence les avantages d'un dispositif selon l'invention.

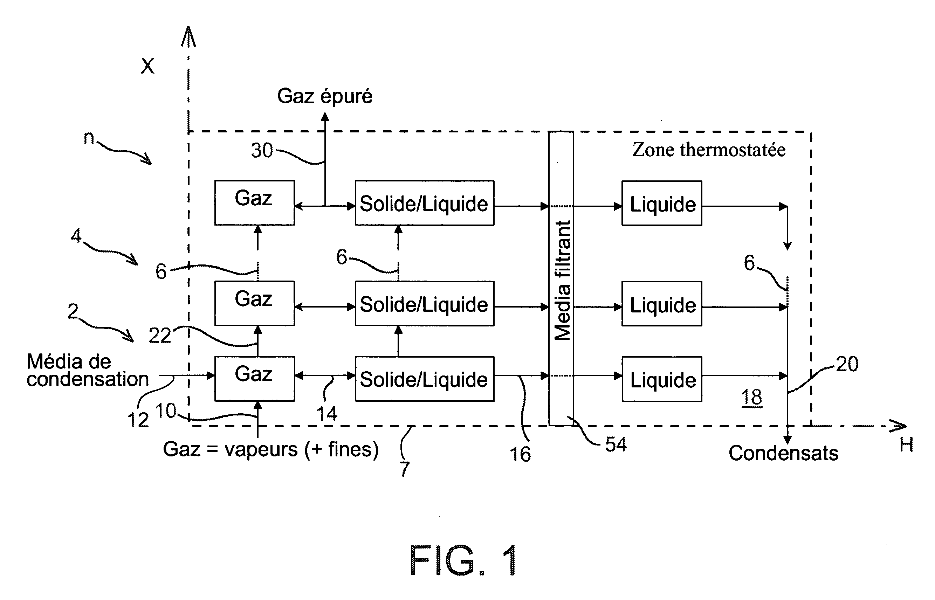

On a représenté sur la figure 1 un schéma de principe classique en génie chimique qui représente de manière simplifiée un nombre d'étage théorique fixé par les caractéristiques procédé du dispositif. Ce dernier comporte un nombre fini d'étages, 2,4,...n, comme schématisé par les lignes en trait pointillé 6. Ces étages sont logés dans une calandre 7.

La ligne entre mixte X schématise l'axe de rotation du dispositif. L'axe vertical indique un degré de purification croissante du gaz et l'axe horizontal H la distance à l'axe de symétrie X du dispositif. Le gaz à épurer, schématisé par la flèche 10 pénètre dans le premier étage 2. Un média de condensation 12 est introduit à ce niveau. Une partie des vapeurs condensables contenant des particules maintenues dans un équilibre solide-liquide (état condensé) est extrait du gaz à épurer comme schématisé par la flèche 14. Au contact des plaques d'impact, la phase condensée accumulée est partiellement liquéfiée et peut ainsi traverser (repère 55) le média 54 tout en limitant l'entraînement de la phase gazeuse de la zone thermostatée. Le liquide est alors extrait du dispositif comme schématisé par la flèche 20. Le gaz à épurer passe ensuite au second étage, désigné par la référence 4, comme schématisé par la flèche 22. Et ainsi de suite. Le gaz épuré sort de l'appareil à la partie supérieure comme représenté par la flèche 30.

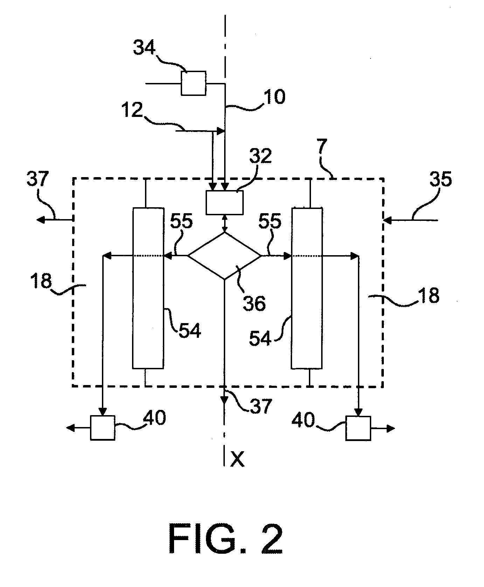

La figure 2 est un schéma de principe représentant sur le plan flux et fonctions/éléments, les sous systèmes correspondants aux grandes fonctions du dispositif de l'invention. Dans la calandre 7 déjà mentionnée, on trouve un échangeur de chaleur 32, par exemple un cryocondenseur refroidi à l'azote liquide. Le gaz à épurer, désigné par référence 10, est mélangé à un média de condensation désigné par la référence 12. Ce média de condensation, également appelé additif, est choisi en fonction de ses propriétés physico-chimiques qui sont à prendre en compte pour obtenir la meilleure nucléation possible.

Le flux gazeux 10 peut optionnellement être pré-refroidi préalablement à sa trempe dans l'échangeur de chaleur 32, par exemple par une circulation à travers un caloduc 34. Cette étape de refroidissement permet un degré de liberté supplémentaire par rapport à la possibilité de trempe dans l'échangeur 32. En ce sens le caloduc 34 est considéré comme ne faisant pas partie du dispositif délimité par la calandre 7 schématisée par les traits tiretés sur la figure 2.

La fonction de centrifugation est symbolisée par le losange 36. Le flux gazeux traverse ensuite un média de filtration 54 disposé concentriquement par rapport à l'axe de symétrie de rotation X du dispositif. Les condensats sont évacués à la partie inférieure de l'appareil par une pompe ou un siphon 40 permettant de maintenir l'étanchéité du système. Le gaz épuré sort en 37. Il peut être recirculé dans la zone thermostatée 18 (flèche 35) avant de sortir de cette zone (flèche 37). Le flux gazeux à traiter 10 peut également être utilisé pour thermostater la zone 18 le cas échéant.

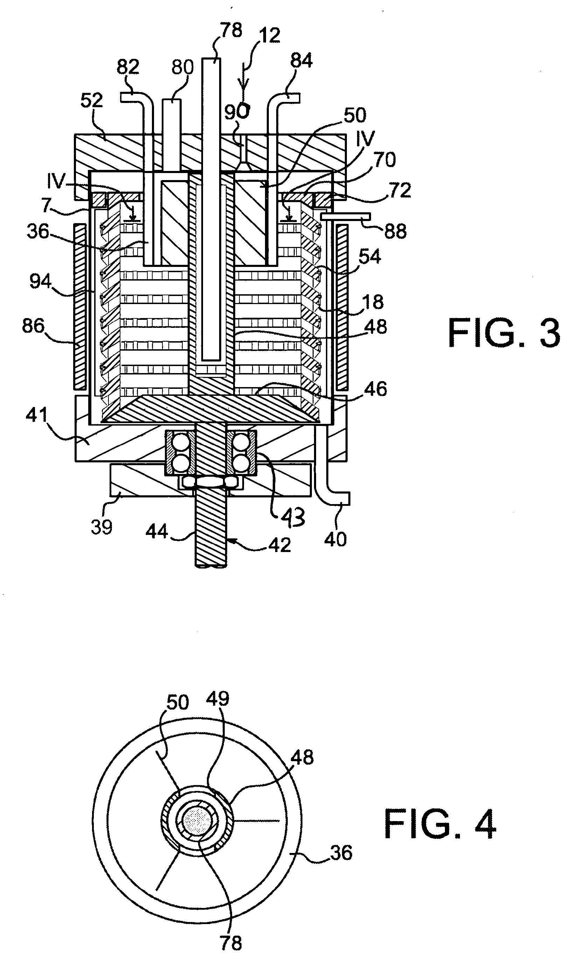

On a représenté sur la figure 3 un exemple de réalisation d'un dispositif d'épuration conforme à l'invention. Il comporte un socle 39 et une bride inférieure 41 fixe par rapport au socle 39. Une calandre 7 est montée sur la bride inférieure 41 est elle porte à sa partie supérieure une bride supérieure 52.

Un ensemble tournant 42 est monté sur le socle 39 et sur la bride 41 par l'intermédiaire d'un palier 43 à roulement à billes. L'ensemble tournant 42 comprend un axe 44 sur lequel est monté un plateau circulaire 46 et un tube ajouré 48. Il est entraîné en rotation, par exemple au moyen d'un moteur électrique non représenté. A son extrémité supérieure, le tube ajouré 48 porte trois peignes racleurs 50 disposés à 120° l'un de l'autre (voir figure 4).

Les condensats au sens non gazeux du terme (c'est-à-dire liquides ou solides) ont naturellement tendance à se déposer et à s'agglomérer dans certains angles de l'appareil, en particulier sur les points froids et fixes, en l'occurrence la paroi périphérique intérieure de l'échangeur 36. Il est donc indispensable, afin de garantir la fonction de refroidissement, d'empêcher Ces dépôts qui dégradent fortement le coefficient d'échange thermique de l'échangeur. Les peignes racleurs ont précisément pour fonction de les empêcher en brassant le flux gazeux dans le volume intérieur de l'échangeur 36.

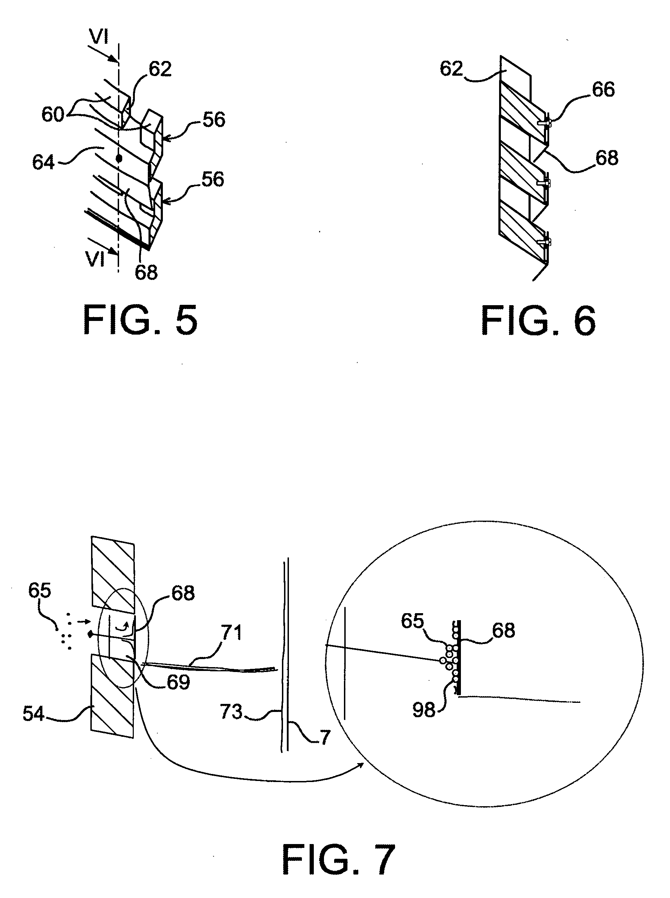

Une virole cylindrique de séparation et de filtration 54 est montée sur le plateau 46 et tourne en même temps que ce plateau. Comme on peut le voir plus particulièrement sur les figures 5 et 6, la virole 54 est constituée d'anneaux 56 superposés. Les anneaux 56 comportent des créneaux 60 qui délimitent entre eux des parties ajourées 62. Des plaques d'impact sont fixées extérieurement à chacun des anneaux 56. Les plaques 64 sont fixées par exemple au moyen de vis 66. Chaque plaque 64 comporte une partie 68, de préférence inclinée vers l'intérieur de la virole 54? qui est située en regard des évidements 62 et qui constitue la plaque d'impact proprement dite.

Grâce à cette réalisation sous forme d'anneaux, la virole 54 peut être facilement démontée et nettoyée. Une bride de maintien 70 assure le maintien de l'ensemble des anneaux. La bride 70 est montée tournante avec le rotor. Elle tourne par rapport à un palier fixe 72 avec lequel un niveau d'étanchéité tournante, plus ou moins importante peut être réalisé.

Par ailleurs, cette conception permet d'allier l'isolation nécessaire entre les zones froides et thermostatée et le maintien d'un transfert de chaleur pour permettre au condensat de migrer vers la partie thermostatée.

Comme on peut le voir également sur la figure 4, le tube 48 comporte deux lumières longitudinales 49 qui ont pour fonction de permettre l'évacuation du flux gazeux via le tube 78.

Un échangeur de chaleur 36 est monté sous la bride supérieure 52. Il présente la forme d'une virole cylindrique qui entoure le tube ajouré 48 auquel il est disposé coaxialement. Les peignes 50 tournent dans l'espace délimité par l'échangeur 36. Un léger jeu est prévu entre l'extrémité des peignes et la paroi intérieure de l'échangeur 36.

Le tube 78 est monté coaxialement à l'axe X du dispositif. L'extrémité inférieure du tube 78 est logée à l'intérieur du tube ajouré 48. La partie supérieure du tube 78 traverse la bride supérieure 52. La canne 78 permet la sortie du gaz traité. L'entrée du gaz à traiter se fait, quant à elle, par un tube 80 qui traverse la bride supérieure 52. Le tube 80 débouche dans le volume défini par la paroi interne de l'échangeur cylindrique 36, c'est-à-dire dans le volume balayé par les peignes 50. Des canalisations 82 et 84 permettent respectivement l'amenée et l'évacuation d'un fluide cryogénique, par exemple l'azote liquide, dans l'échangeur 36.

Optionnellement un élément chauffant 86 peut entourer la calandre 7. En outre, la totalité ou une partie du flux traité (voire celui à traiter) évacué par le tube 78 peut être recirculé dans le volume annulaire définit entre la périphérie de la virole 54 et la calandre 7 par la canalisation 88 de manière à constituer une zone thermostatée 18.

Un fluide auxiliaire peut en outre être injecté par une tubulure 90. L'orifice 90 a pour fonction l'introduction du média de condensation correspondant au numéro de référence 12 (voir figure 2) et donc de favoriser la nucléation. Il permet la précipitation d'un brouillard de condensat. Cet additif nébulisé en amont de la trempe, et choisi pour ses propriétés physico-chimiques (température de condensation, polarité, miscibilité, permittivité) adaptées au cas d'épuration que l'on cherche à atteindre, notamment s'il s'agit soit de récupérer le condensat soit prioritairement d'épurer le flux entrant dans le système.

Dans une réalisation préférée, une électrode cylindrique 94 est disposée à l'extérieur de la virole 54. L'électrode 94 peut être disposée à l'intérieur de la calandre 7, comme représenté sur la figure 3, ou extérieurement à cette calandre. Avantageusement, le tube d'évacuation du flux gazeux traité 78 joue le rôle de contre électrode. On établit une différence de potentiel, généralement fixe, entre l'électrode 94 et la contre électrode 78 de manière à favoriser une précipitation électrostatique. Le média de condensation sera de préférence choisi de manière à favoriser cette précipitation (considération conjuguée entre le diamètre de particules formées par la condensation du mélange) média-auxiliaire (canalisation 90)/condensat et la permétivité de ces particules.

L'ensemble tournant 42 permet une centrifugation du flux à des vitesses suffisantes pour un taux de séparation des particules de condensat adapté au cas d'épuration souhaité. Cette étape permet de faire migrer les particules vers le média filtrant, en l'occurrence la virole 54 de filtration et de séparation, à une vitesse suffisante par rapport à leur temps de séjour dans le dispositif d'épuration. Pour la conception de la zone de centrifugation, il est possible en première approximation de déterminer la vitesse limite de migration d'une particule en supposant l'égalité des forces centrifuge et de Stockes telle qu'il est possible de l'évaluer pour des particules dont le diamètre moyen équivalent est compris approximativement entre 1 et 50$\mu$m. Le temps nécessaire à une particule pour sédimenter peut donc être exprimé comme suit :

$$t = Kc . \frac{\log(a / Rcanne)}{(ND)^2} \quad (1)$$

avec

$$Kc = \frac{9\eta}{2\pi^2 \Delta\rho}$$

et :

N : fréquence de rotation
a : rayon de rotation
Rcanne : rayon de la canne de sortie des gaz à épurer (zone non libre)
D : diamètre des particules
$\eta$ : viscosité du gaz à épurer
$\Delta\rho$ : différence de masse volumique entre la particule de condensat et le gaz à traiter.

En s'appuyant sur la relation (1), il est possible pour un dimensionnement et une vitesse de rotation donnés de représenter le temps de sédimentation des particules en fonction de leur diamètre moyen. On a ainsi l'expression d'une droite en échelle logarithmique de la forme suivante :

$$\texttt{Log(t)=-2log(D)+(logK-2logN)\ avec\ K=Kclog(a/Rcanne)}$$

Il est alors possible de définir le débit de gaz limite (Q) à la sortie de la centrifugeuse suivant l'expression suivante pour un volume de centrifuge donné (V) :

$$\texttt{Q=V/t}$$

Au-delà des temps de sédimentation en fonction de la vitesse de rotation, il est utile de pouvoir estimer la surpression au paroi du à la force centrifuge appliquée. Au-delà de considérations touchant au calcul des éléments de structure, la surpression induite par la centrifugation doit favoriser le processus de condensation.

En supposant un mouvement de base conduisant à une rotation de corps rigide et en négligeant l'influence des particules sur le gradient de pression, il est possible d'exprimer un profil de pression radial dans le centrifugeur par la relation suivante :

$$\frac{P(r)}{P(a)} = \exp\left[\frac{M(\Omega a)2}{2RT}(1-\frac{r^2}{a^2})\right]$$

où

P(r) : pression local à la cote radiale r
P(a) : pression local à la cote a
M : masse du gaz vecteur
T : température du milieu
$\Omega$ : vitesse angulaire de rotation

On peut ainsi en déduire des ordres de grandeurs de dimensionnement et de vitesse de rotation pour un flux à traiter donner.

La centrifugation est favorisée optionnellement par l'action combinée d'un champ électrostatique généré au sein de la zone de séparation, comme expliqué précédemment. La vitesse Uc de migration (ou de collecte) des particules de condensats par le seul effet électrostatique peut être exprimé par une relation du type :

$$Uc = \left(1+2\frac{\varepsilon_r -1}{\varepsilon_r +2}\right)\frac{I.D}{k\mu}$$

Pour une nature (permittivité relative ($\varepsilon_r$) et un diamètre (D)) de particules de condensat données, il est possible d'en déduire l'intensité (I) à appliquer à l'électrode de collecte pour obtenir une vitesse de migration donnée. Cet effet électrostatique s'additionne à l'effet de séparation inertielle dans la mesure où les particules sont électrisables dans des conditions standards de fonctionnement des électroprécipitateurs.

Il est à noter également qu'en appliquant une vitesse de rotation suffisante, une surpression locale au droit du média filtrant 54 induite par la force centrifuge favorise le phénomène de condensation.

Le média filtrant 54 permet de constituer une barrière d'impaction favorisant la recondensation des particules de contensat et l'enrichissement en condensats du côté de la calandre 7. Les éléments constitutifs du média sont avantageusement constitués d'éléments isolants thermiquement puis d'éléments conducteurs thermiques dans le sens radial allant de la zone interne du média filtrant 54 vers sa face externe (en regard avec la zone thermostatée 18) ; ceci pour assurer un maintien en température aussi bien du côté centrifugateur (l'intérieur de la virole 54) que du côté de la calandre 7 afin de favoriser le transfert du condensat puis son écoulement avant qu'il soit évacué par les systèmes de purge en continu 40.

L'objectif est de former des agrégats de particules solides/liquides 69 sur les faces internes des plaques d'impactions 68 (figures 5 et 6). Le léger gradient de température contrôlé et imposé par la zone thermostatée 18 permet alors une liquéfaction et la formation d'un film de condensat 98 (figure 7) évacuable par les jeux 69 aménagés entre les éléments d'impaction et de répartition de température 68 et le média (la virole 54) de séparation faisant également office de barrière thermique. Un jet de liquide de 71 frappe la calandre 7 et un film de liquide 73 se dépose sur celle-ci. Les passages 69 permettent par ailleurs de maîtriser la perte de charge au droit du média et de compenser son colmatage, notamment dans le cas où celui-ci est constitué d'éléments de captation par absorption-adsorption.

Les performances du dispositif de l'invention reposent sur les effets combinés de la centrifugation, de l'impaction, du refroidissement, du champ électrostatique, de la nucléation et enfin de la l'adsorption. Néanmoins, au-delà de la combinaison de ces approches séparatives et de l'adaptabilité du procédé, l'originalité de la présente invention réside dans la méthode de séparation/purification alliant un changement de phase et une séparation combinée. Pour parvenir à ce résultat et minimiser tout à la fois l'entraînement de gaz dans les condensats ou inversement, des condensats dans le flux gazeux, un film de matière solide constitué par les matières condensables (mélangées ou non à un média de condensation si l'objectif est de récupérer les condensables ou plutôt de valoriser le flux gazeux) constitue lui-même une interphase garantissant la séparation des flux. En effet, le flux de chaleur imposé sur la zone extérieure au média de filtration (zone thermostatée) permet de maintenir un équilibre et un gradient de température entre le film solide et les plaques d'impact et de répartition thermique. Ainsi, en passant progressivement d'un état solide à un état liquide, les condensables migrent à l'extérieur de la zone d'admission du gaz chargé de condensables vers la zone thermostatée tout en formant une pellicule évitant l'entraînement du gaz chargé. La conception de l'appareil permet par ailleurs de jouer sur l'épaisseur du film (en appliquant par exemple une température adaptée dans la zone thermostatée) pour obtenir des niveaux de performance séparatives plus ou moins importantes suivant la nature des condensables.

Ce qui est expliqué précédemment pour la partie plaque de répartition est également applicable (optionnellement) à la zone de média filtrant dans le cas où celle-ci est constituée de matériaux absorbants aptes à capter les espèces condensables. L'ajustement (en réglant par exemple la vitesse de rotation du dispositif ou en choisissant une nature de média d'absorption spécifique) entre force d'absorption et force centripète permet de contrôler le taux d'engorgement du média et par là même la quantité d'espèces condensables migrant vers la zone de collecte.

Suivant la nature des condensables (c'est-à-dire principalement selon leur comportement vis-à-vis de l'effet de condensation, de formation de solide ou de liquide plus ou moins visqueux), il sera ainsi possible de privilégier l'une ou l'autre des adaptations technologiques séparatives précitées.

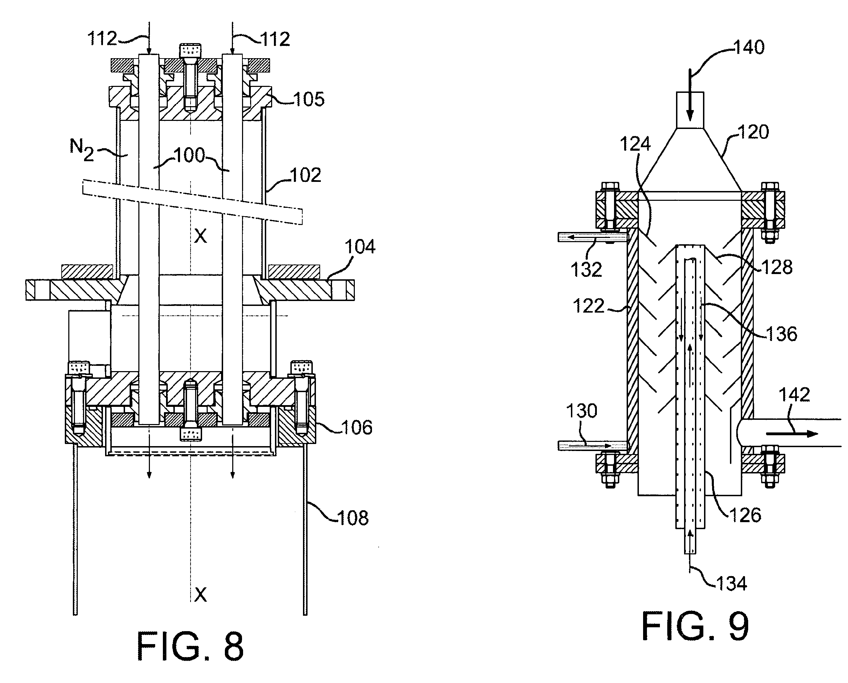

On a représenté sur la figure 8 une vue en coupe d'un autre mode de réalisation d'un cryocondenseur pouvant être utilisé dans le cadre d'un dispositif d'épuration de flux gazeux conforme à l'invention. Il comporte un faisceau de tube 100 (deux tubes seulement ont été représentés sur la figure 8) à l'intérieur d'une virole cylindrique 102 elle-même fixée sur une bride 104. Les tubes 100 sont solidaires, à leurs extrémités supérieures, d'une bride 105, et à leurs extrémités inférieures, d'une bride 106. Une virole 108, réalisée par exemple en acier inoxydable, est montée sous la bride 106. Le gaz à épurer est introduit dans le faisceau des tubes 100, comme schématisé par les flèches 112. Il débouche dans le volume intérieur défini par la virole 108. Un liquide cryogénique par exemple l'azote liquide, circule autour des tubes 100 de manière à réaliser une trempe du gaz à épurer.

On a représenté sur la figure 9 un dévésiculeur à plaques utilisé en référence afin de comparer ses performances à celle d'un dispositif constitutif et conforme à l'invention (cryocondenseur). Cet appareil de constitution simple, comporte un cône 120 à sa partie supérieure. Ce cône est raccordé à un cylindre extérieur 122 sur la paroi interne duquel sont disposées une série de plaques de formes coniques 124. Un tube intérieur 126 est disposé dans le tube 122 coaxialement à ce dernier. Le tube intérieur 126 porte lui aussi des plaques 128 coniques ou tronconiques. Le tube intérieur 122 et le tube extérieur 126 sont refroidis à une température de -5°C à -10°C par une circulation d'un fluide caloporteur généralement de l'eau glycolée. L'entrée de l'eau glycolée dans le tube extérieur a été représentée par la flèche 130 et sa sortie par la flèche 132. Les flèches 134 et 136 schématisent respectivement l'introduction et l'évacuation de l'eau glycolée dans le tube intérieur 126.

Le flux à épurer est introduit à la partie supérieure du cône comme schématisé par la flèche 140. Il suit un parcours sinueux défini par les éléments tronconiques 124 et 128 avant de quitter l'appareil par sa partie inférieure comme schématisé par la flèche 142.

Exemple : épuration de condensats de type goudrons

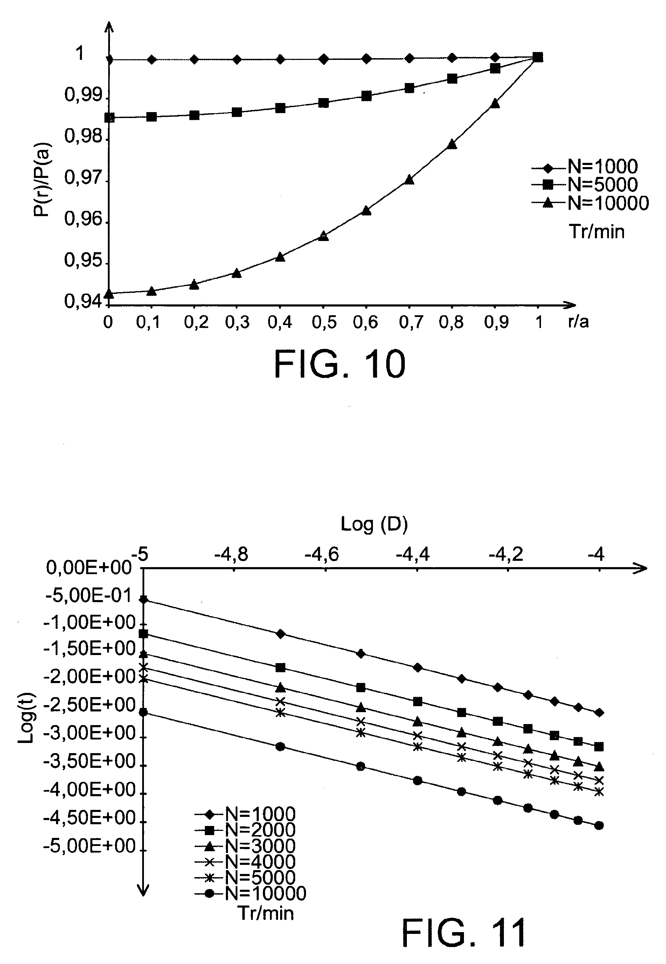

Sans autres effets qu'une condensation des espèces condensables au moyen d'un dévésiculeur à plaques, le flux de gaz à traiter (gaz de pyrolyse de bio-masse réalisée aux environs de 500°C) comporte encore suffisamment de condensats pour perturber la mesure de débit donnée par un débitmètre de type Coriolis. La teneur en condensat dans le flux passe de 100gr/Nm$^3$ à 10gr/Nm$^3$ environ. (voir figure 10).

Les temps de passage des gaz à traiter sont de l'ordre de la dizaine de secondes. Dans le cas présent, deux dévésiculeurs à plaques disposés en série, par exemple du type représenté sur la figure 9, ont été utilisés pour obtenir le niveau d'épuration précité.

Pour améliorer l'épuration du flux gazeux vis-à-vis des goudrons, un dispositif cryocondenseur tel que celui représenté sur la figure 8 a été utilisé et implanté complémentairement à la suite des deux dévésiculeurs à plaques. Les essais d'épuration complémentaires avec ce dispositif (température de peau de -90°C environ) ont permis d'observer la possibilité de former des particules de condensats de diamètres variables excédants rarement 0,5mm suivant l'humidité présente dans le gaz à épurer. Les temps de séjour dans cet appareil avoisinent la seconde.

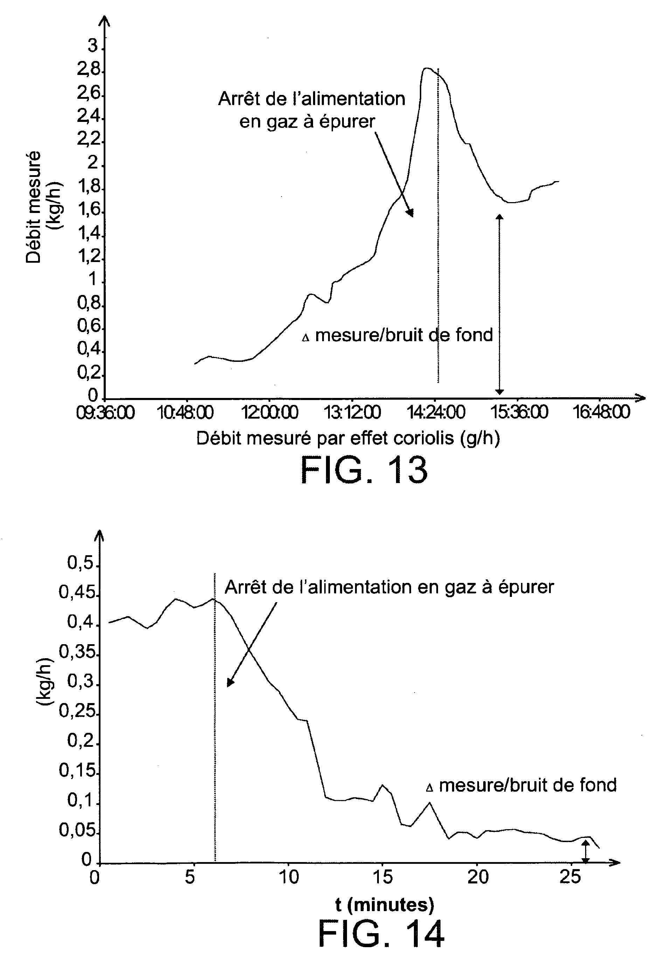

Le résultat de cette épuration a été représenté sur la figure 14.

Les courbes des figures 10, 11 et 12 donnent des éléments chiffrés d'ordre de grandeur des paramètres de surpression locale au droit du média de séparation et les performances pouvant être attendues pour des diamètres de particules (vésicule et/ou solide) et des vitesses de rotation données.

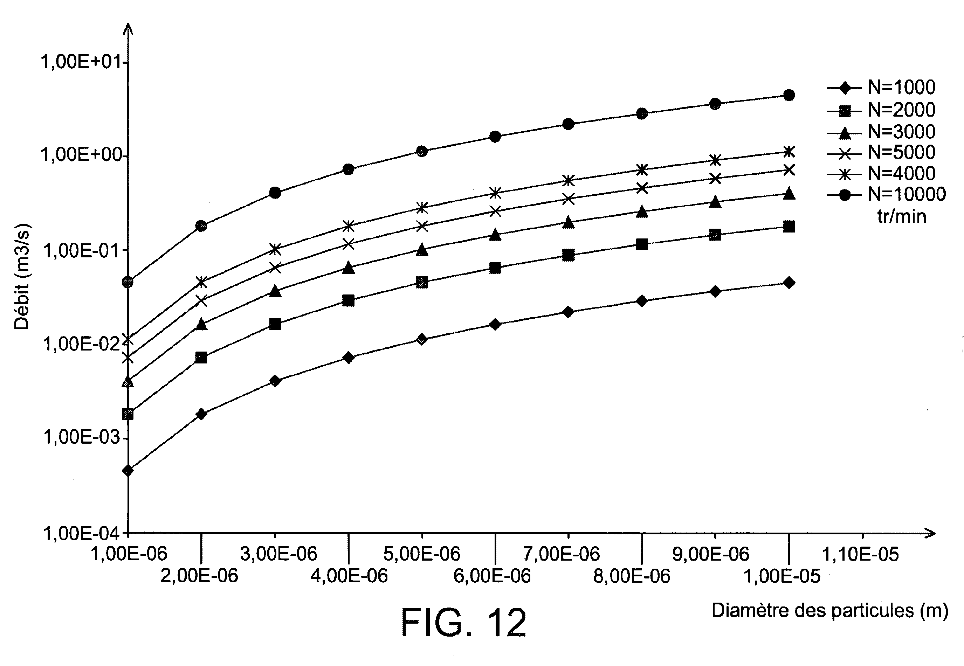

La figure 10 donne le rapport entre la pression locale et la pression à la paroi (P(r)/P(a)) en fonction de la cote (r/a). La figure 11 donne le temps de sédimentation en fonction du diamètre des particules (effet inertiel seul) et la figure 12 le débit maximal de gaz permettant d'atteindre le temps de sédimentation des particules. La figure 13 indique le débit mesuré par effet coriolis avec un séparateur à plaques et la figure 14 avec cryocondenseur et média filtrant.

Les calculs ont été réalisés avec les hypothèses suivantes :

A=0,1m
T=310K
M=28g/mol
Rcanne=0,01m
$\Delta\rho$=984,4kg/m$^3$
$\eta$=1,65.10$^{-5}$Pa.s
V=0,013m$^3$
Nature des goudrons : naphtalène

| Caractéristiques indicatives (ordres de grandeurs) du séparateur | |
|---|---|
| | |
| Puissance frigorifique volumique | 70W/m$^3$ |
| Volume de séparateur par débit volumique de gaz à traiter | 0,002 m$^3$/(m$^3$/h) |
| T entrée | 500K |
| $\Delta T$ (entrée-sortie) | 200K |
| Diamètre critique des particules à piéger | 10$\mu$m |
| Concentration amont en condensable (C10H8) | De 50 à 5 g/m$^3$ |
| Concentration aval en condensable (C10H8) | <0,1 g/m$^3$ |
| Teneur en eau maximale admissible dans le gaz à traiter | 10% volumique |

**Revendications**

1. Dispositif d'épuration d'un flux gazeux contenant des vapeurs condensables, **caractérisé en ce qu'**il comprend une calandre (7) définissant un volume étanche, dans la calandre (7) sont logés un refroidisseur (36) pour tremper le flux gazeux, un tube (80) d'entrée pour le flux gazeux à traiter débouchant dans le volume intérieur du refroidisseur (36), un ensemble tournant (42) comprenant un rotor (44) une virole cylindrique de séparation et filtration (54) montée sur le rotor et tournant avec lui, un tube support (48) monté sur le rotor (44) et portant un dispositif turbuleur-racleur (50) dans le volume intérieure du refroidisseur (36), une électrode (94) entourant la virole de séparation et filtration (54) et une contre-électrode centrale (78) pour la création d'un champ électrostatique dans la calandre, un tube (78) de sortie du gaz épuré, une canalisation (40) de sortie des condensats assurant l'évacuation tout en garantissant l'étanchéité du système.

2. Dispositif d'épuration selon la revendication 1, **caractérisé en ce que** la virole de séparation et filtration (54) est constituée d'anneaux circulaires crénelés superposés (56), une plaque d'impact et de séparation (64) étant fixée sur chacun des anneaux (56) de la virole.

3. Dispositif d'épuration selon la revendication 2, **caractérisé en ce que** la virole de séparation et de filtration (54) est constituée d'anneaux thermiquement isolants et de plaques thermiquement conductrices pour assurer un transfert thermique maîtrisé entre la zone interne à la virole de séparation-filtration et une zone thermostatée (18).

4. Dispositif d'épuration selon la revendication 2 ou 3, **caractérisé en ce que** la virole de séparation et filtration (54) est constituée de matériaux absorbants aptes à capter les espèces condensables.

5. Dispositif d'épuration selon l'une des revendications 1 à 4, **caractérisé en ce que** la zone thermostatée (18) entoure la virole de séparation et de filtration (54).

6. Dispositif d'épuration selon l'une des revendications 1 à 5, **caractérisé en ce qu'**il comporte un tube (78) de sortie du gaz épuré qui joue simultanément le rôle de contre-électrode.

**Claims**

1. Device for purification of a gas flow containing condensable vapours, **characterized in that** it comprises a shell (7) defining a sealed volume, said shell (7) housing a cooler (36) to quench the gas flow, an intake tube (80) for the gas flow to be treated issuing into the inner volume of the cooler (36), a rotating assembly (42) comprising a rotor (44) and a cylindrical separation and filtration skirt (54) mounted on the rotor and rotating with it, a support tube (48) mounted on the rotor (44) and carrying a turbulator-scraper device (50) in the inner volume of the cooler (36), an electrode (94) surrounding the separation and filtration skirt (54) and a central counter-electrode (78) to create an electrostatic field in the shell, a purified gas outlet tube (78), a condensate outlet pipe (40) for evacuation while making the system leaktight.

2. Purification device set forth in claim 1, **characterized in that** the separation and filtration skirt (54) is composed of superposed serrated circular rings (56), an impact and separation plate (64) being fixed on each of the rings (56) of the skirt.

3. Purification device set forth in claim 2, **characterized in that** the separation and filtration skirt (54) is composed of thermally insulating rings and thermally conducting impact plates, to give a controlled heat transfer between the zone inside the separation-filtration skirt and a thermostat controlled zone (18).

4. Purification device set forth in claim 2 or 3, **characterized in that** the separation and filtration skirt (54) is composed of absorbent materials capable of capturing condensable species.

5. Purification device set forth in one of claims 1 to 4, **characterized in that** the thermostat controlled zone (18) surrounds the separation and filtration skirt (54).

6. Purification device set forth in one of claims 1 to 5, **characterized in that** it comprises a purified gas outlet tube (78) that simultaneously acts as a counter-electrode.

**Patentansprüche**

1. Vorrichtung zur Reinigung eines kondensierbare Dämpfe enthaltenden Gasstroms, **dadurch gekennzeichnet, dass** sie einen ein dichtes Volumen abgrenzenden Kalander (7) umfasst, wobei der Kalander (7) einen Kühler (36) zum Abschrecken des Gasstroms und ein in dem Innenvolumen des Kühlers (36) mündendes Eintrittsrohr (80) des zu behandelnden Gasstroms umfasst, und eine drehbare Einheit (42) umfasst, mit einem Rotor (44) und einem auf den Rotor montierten und mit ihm rotierenden zylindrischen Trenn- und Filtermantel (54), einem auf den Rotor (44) montierten und im Innenvolumen des Kühlers (36) eine Verwirbelungs- und Abstreifeinrichtung (50) tragenden Trägerrohr, einer den Trenn- und Filtermantel (54) umgebenden Elektrode (94) und einer zentralen Gegenelektrode (78) zur Erzeugung eines elektrostatischen Felds in dem Kalander, einem Austrittsrohr (78) des gereinigten Gases und einer Austrittsleitung (40) der Kondensate, welche die Entleerung gewährleistet und dabei die Dichtheit des Systems garantiert.

2. Reinigungsvorrichtung nach Anspruch 1, **dadurch gekennzeichnet, dass** der Trenn- und Filtermantel (54) durch aufeinanderliegende gerippte kreisrunde Ringe (56) gebildet wird und auf jedem der Ringe (56) des Mantels eine Prall- und Trennplatte (64) befestigt ist.

3. Reinigungsvorrichtung nach Anspruch 2, **dadurch gekennzeichnet, dass** der Trenn- und Filtermantel (54) durch wärmeisolierende Ringe und wärmeleitende Platten gebildet wird, um die Beherrschung des Wärmetransfers zwischen der Innenzone des Trenn- und Filtermantels und einer temperaturgeregelten Zone (18) zu gewährleisten.

4. Reinigungsvorrichtung nach Anspruch 2 oder 3, **dadurch gekennzeichnet, dass** der Trenn- und Filtermantel (54) durch Absorptionsmaterialien gebildet wird, die fähig sind, die kondensierbaren Spezies einzufangen bzw. aufzunehmen.

5. Reinigungsvorrichtung nach einem der Ansprüche 1 bis 4, **dadurch gekennzeichnet, dass** die temperaturgeregelte Zone (18) den Trenn- und Filtermantel (54) umgibt.

6. Reinigungsvorrichtung nach Anspruch einem der Ansprüche 1 bis 5, **dadurch gekennzeichnet, dass** sie ein Austrittsrohr (78) des gereinigten Gases umfasst, das simultan die Rolle der Gegenelektrode spielt.

FIG. 1

# FIG. 2

FIG. 3

FIG. 4

**FIG. 5**

**FIG. 6**

**FIG. 7**

FIG. 8

FIG. 9

EP 1 833 593 B1

FIG. 10

FIG. 11

FIG. 12

FIG. 13

FIG. 14

**EP 1 833 593 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4723970 A
- DE 8905182
- WO 9208937 A
- US 3890122 A